## Europäisches Patentamt
## European Patent Office
## Office européen des brevets

(19)

(11) Numéro de publication: **0 023 447**
**B1**

(12)

# FASCICULE DE BREVET EUROPEEN

(45) Date de publication du fascicule du brevet: 06.04.83

(51) Int. Cl.³: **G 02 F 1/13,** H 04 M 1/00

(21) Numéro de dépôt: 80401076.7

(22) Date de dépôt: 18.07.80

(54) **Dispositif de visualisation à cristal liquide, et terminal téléphonique comportant un tel dispositif.**

(30) Priorité: 27.07.79 FR 7919426

(43) Date de publication de la demande:
04.02.81 Bulletin 81/5

(45) Mention de la délivrance du brevet:
06.04.83 Bulletin 83/14

(84) Etats contractants désignés:
**DE GB IT NL SE**

(56) Documents cités:
**FR-A-1 484 585**
**FR-A-2 389 955**

(73) Titulaire: **THOMSON-CSF, 173, Boulevard Haussmann, F-75379 Paris Cedex 08 (FR)**

(72) Inventeur: **Hareng, Michel, THOMSON-CSF SCPI 173, Bld Haussmann, F-75360 Paris Cedex 08 (FR)**
Inventeur: **Le Berre, Serge, THOMSON-CSF SCPI 173, Bld Haussmann, F-75360 Paris Cedex 08 (FR)**
Inventeur: **Leclerc, Pierre, THOMSON-CSF SCPI 173, Bld Haussmann, F-75360 Paris Cedex 08 (FR)**
Inventeur: **Perbet, Jean-Noel, THOMSON-CSF SCPI 173, Bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

ACTORUM AG

Dispositif de visualisation à cristal liquide, et terminal téléphonique comportant un tel dispositif

La présente invention se rapporte aux dispositifs de visualisation à cristal liquide qui permettent d'afficher des informations visuelles représentées par un signal électrique appliqué à ces dispositifs. Elle concerne également les terminaux téléphoniques qui comportent un tel dispositif et qui permettent par exemple de consulter à distance l'annuaire téléphonique.

On sait construire des dispositifs de visualisation à cristal liquide utilisant différents effets électro-optiques.

Dans la demande de brevet français No 77.13738 déposée le 5 mai 1977 par la titulaire sous le titre: «Dispositif de visualisation d'images, et système de télévision utilisant un tel dispositif» et publiée sous le No 2389955, on a décrit un dispositif de visualisation dans lequel l'inscription se fait au moyen d'un effet thermo-électrique. Pour cela, ce dispositif comprend un ensemble de lignes chauffantes qui sont excitées par une tension de chauffage les unes après les autres. Le cristal liquide passe dans une phase liquide le long de la ligne qui est chauffée, puis il devient diffusant lorsqu'il se refroidit. Le dispositif comprend également un ensemble de colonnes croisées avec l'ensemble des lignes. On applique à ces colonnes un ensemble de tensions représentant la ligne à inscrire pendant le refroidissement de celle-ci. Selon la valeur du champ électrique résultant des tensions appliquées, le cristal liquide devient plus ou moins diffusant à chaque intersection entre les colonnes de l'ensemble et la ligne qui se refroidit. On peut ainsi procéder à l'inscription dans le dispositif d'une image analysée selon une trame de télévision par exemple. Cette inscription s'opère ligne par ligne. L'image ainsi inscrite reste mémorisée jusqu'à ce que l'on procède à un effacement. Celui-ci se produit par exemple à l'inscription de l'image suivante, où chaque ligne est effacée lors du chauffage, puis inscrite avec le nouveau signal lors du refroidissement.

Les dimensions de ce dispositif sont limitées essentiellement pour des raisons de dissipation thermique. En effet, si on voulait obtenir un dispositif observable à l'œil nu et à une distance raisonnable, il faudrait dissiper dans chaque ligne chauffante une puissance très importante que l'on ne saurait pas contrôler et qui pourrait amener à une destruction de l'ensemble. Pour observer donc l'image ainsi inscrite, on peut, dans certains cas, utiliser une loupe mais, le plus souvent, on procède à la projection de celle-ci sur un écran. Pour l'utilisation d'un tel dispositif dans un récepteur de télévision, l'encombrement, le coût et les besoins de maintenance des dispositifs annexes nécessaires pour procéder à cette projection sont de peu d'importance.

Par contre, pour utiliser un tel dispositif dans un terminal téléphonique, notamment pour consulter l'annuaire, il est impératif de pouvoir le regarder en vision directe sans procéder à une projection. Les dimensions qui sont alors nécessaires, de l'ordre de la dizaine de centimètres, ne permettent pas de réaliser ce dispositif sans adaptation.

L'objet de l'invention est un dispositif de visualisation à cristal liquide, du type comprenant une couche de cristal liquide inscriptible par effet thermo-électrique et comprise entre deux plaques dont l'une au moins est transparente, un ensemble de lignes résistives situé entre l'une des plaques et la couche de cristal liquide et permettant de chauffer le cristal liquide au moins jusqu'à sa température d'effacement selon successivement chacune des lignes, et un ensemble de colonnes situé entre l'autre plaque et la couche de cristal liquide, croisé avec les lignes et permettant d'appliquer à toute cette couche, durant le refroidissement d'une ligne, un champ électrique représentant l'information à inscrire le long de la ligne qui se refroidit, caractérisé en ce que la diffusivité thermique de la plaque supportant les lignes résistives est inférieure à $2 \cdot 10^{-2}$ cm²/s. Cette valeur permet d'obtenir un dispositif susceptible d'être observé à l'œil nu.

D'autres particularités et avantages de l'invention apparaîtront clairement dans la description suivante présentée à titre d'exemple non limitatif et faite en regard des figures annexées 1 et 2 qui représentent deux vues différentes d'un même dispositif de visualisation.

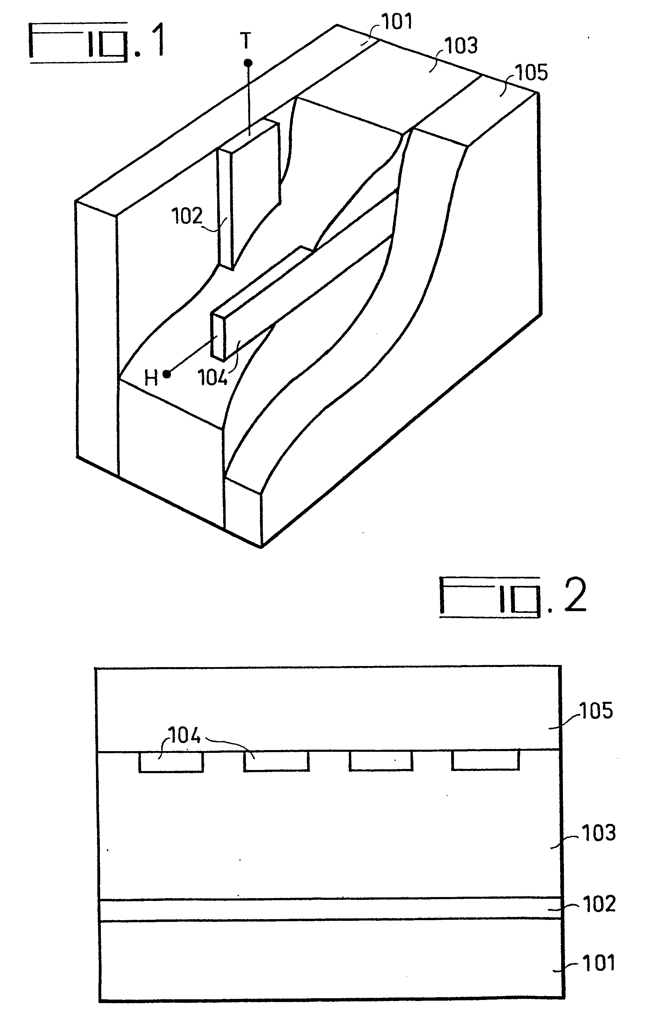

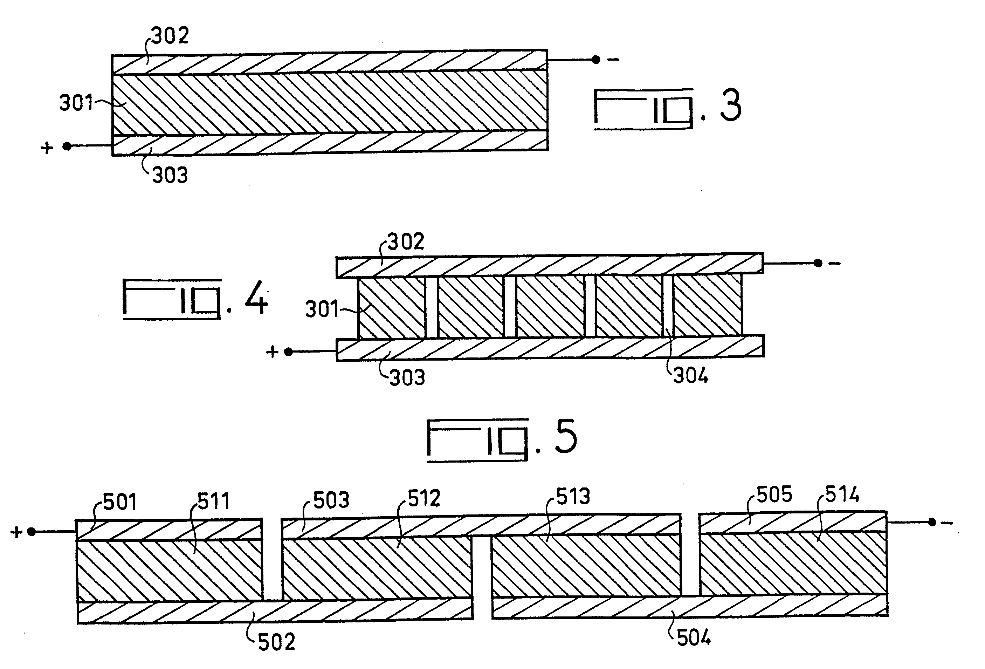

Les fig. 3, 4 et 5 représentent trois exemples de lignes chauffantes utilisées dans le dispositif de visualisation.

Dans la fig. 2, on a représenté une coupe de celui-ci et, dans la fig. 1, une vue écorchée en perspective. Cette vue de la fig. 1 est limitée, pour la lisibilité de la figure, à une portion du dispositif comprenant une seule électrode dans chaque sens et délimitant un point de visualisation unique.

Une couche de cristal liquide 103 est insérée entre deux plaques 101 et 105. Sur la plaque 101 au contact du cristal liquide est déposé un ensemble de lignes résistives telles que 102. Ces lignes sont alimentées par l'intermédiaire d'électrodes telles que T par une tension de chauffage qui les porte par effet Joule à une température qui amène le cristal liquide en phase isotrope.

Lorsque la tension de chauffage est supprimée, le cristal liquide se refroidit et prend, lors de son refroidissement, une structure dite en coniques focales, qui est diffusante.

La plaque 105 porte, au contact du cristal liquide, un ensemble de colonnes telles que 104 muni de connexions H. En appliquant, lors du refroidissement du cristal liquide, une tension de valeur convenable entre les connexions T et H, on établit un champ électrique à l'intérieur du cristal liquide aux points de croisement des lignes 102 et des colonnes 104. Ce champ électrique empêche alors la structure en coniques focales de s'établir pendant le refroidissement, et le cristal liquide garde son aspect transparent. Ce champ électrique n'agit que sur le cristal qui est en voie de refroidissement et est incapable de réorienter le cristal qui a été refroidi en étant diffusant avant l'application du champ électrique. L'ensemble des lignes 102 et des colonnes 104 permet, en chauffant successivement chacune des lignes 102 et en appliquant les tensions désirées sur les colonnes 104, d'inscrire les informations désirées sur chacune des lignes en procédant donc à un adressage ligne par ligne.

On sait réaliser un tel dispositif pour faire un affichage du type télévision, c'est-à-dire avec une durée maximale pour l'inscription d'une ligne inférieure à 64 μs. Pour cela, on doit chauffer rapidement et refroidir rapidement le cristal liquide et donc toute la zone qui entoure la ligne de chauffage utilisée. La contrainte sur le temps de refroidissement entraîne l'utilisation, pour la plaque 101, d'un substrat en silicium recouvert d'une fine couche d'oxyde de silicium qui permet d'isoler, au point de vue électrique de ce substrat, les lignes chauffantes 102.

La vitesse de diffusion de la chaleur dans le substrat 101 ainsi fixée impose une valeur minimale au dégagement de chaleur par effet Joule et unité de surface dans les lignes 102. On obtient ainsi la puissance minimale par unité de longueur de ligne chauffante, compte tenu de ce qu'il faut respecter un certain format de l'image à afficher. Comme il faut pourvoir commander les tensions appliquées aux connexions T, ce qui impose en pratique l'utilisation d'un circuit intégré dans le substrat 101, on ne peut dépasser une certaine puissance totale d'alimentation de ces lignes chauffantes, qui seraient d'autre part détruites par la chaleur dégagée, si on arrivait à dépasser cette puissance.

Compte tenu de toutes ces considérations, les dimensions des dispositifs réalisés sont de l'ordre du centimètre.

Pour utiliser un dispositif de visualisation de cette nature dans un terminal téléphonique, en vue par exemple de consulter à distance l'annuaire téléphonique, il est souhaitable, pour procéder à une observation directe dans des conditions confortables pour l'abonné, d'arriver à fabriquer un dispositif ayant des dimensions de l'ordre de la dizaine de centimètres. Un tel dispositif, s'il était réalisé de la manière décrite ci-dessus, nécessiterait une puissance d'alimentation extravagante de l'ordre de quelques kilowatts.

Il n'est toutefois pas nécessaire alors de recourir à un balayage du type télévision et les spécifications les plus courantes demandent de pouvoir inscrire 120 caractères alphanumériques par seconde sous la forme de 25 lignes de 40 caractères pour un écran de dimensions 10×10 cm. Cela correspond, en supposant l'analyse d'un caractère alphanumérique faite selon une matrice 7×5 et en comptant 2 intervalles de garde entre les caractères et 3 intervalles de garde entre les lignes, à 200 lignes et 200 colonnes, soit 2 lignes et 2 colonnes par millimètre, leur largeur étant égale à un peu moins de 50/100 mm pour tenir compte d'un certain intervalle entre elles. Les lignes sont donc adressées, pour obtenir les 120 caractères par seconde, à raison de 24 lignes chauffantes par seconde, soit un temps disponible pour l'inscription au plus égal à 40 ms.

On dispose donc, pour refroidir le cristal liquide après qu'il a été chauffé, d'un temps bien plus long que dans le dispositif précédemment connu. La diffusivité thermique du substrat en silicium recouvert d'une mince couche (environ 5 μ) d'oxyde de silicium, qui est de 1 cm²/s et qui permettait la vitesse nécessaire pour l'affichage de type télévision, n'est plus ici utile et elle est même nuisible en raison des grandes dimensions du dispositif et de la puissance de chauffage qu'elle nécessite. Il faut toutefois qu'une quantité assez importante de chaleur s'évacue par la plaque 101 et non pas par le cristal liquide 103 pour éviter qu'un phénomène cumulatif n'amène la totalité du cristal liquide dans l'état isotrope sans possibilité de retour à l'état diffusant, sauf à couper l'alimentation de l'appareil pendant un temps plus ou moins long. Conformément à l'invention, la diffusivité thermique de la plaque supportant les lignes résistives est inférieure à $2 \cdot 10^{-2}$ cm²/s. La diffusivité des cristaux liquides utilisés généralement étant de l'ordre de $2 \cdot 10^{-3}$ cm²/s , on peut utiliser par exemple du verre dont la diffusivité thermique est sensiblement de $5,5 \cdot 10^{-3}$ cm²/s. Ce matériau est bon marché et on peut l'obtenir dans les dimensions souhaitées avec un état de surface tout à fait convenable pour l'application envisagée. Sa diffusivité est toutefois un peu trop faible par rapport à celle du cristal liquide et on peut utiliser le cas échéant de la silice $(8,3 \cdot 10^{-3}$ cm²/s), ou bien encore des matériaux synthétiques tel que le polytéréphtalate d'éthylèneglycol $(2 \cdot 10^{-4}$ cm²/s) ou le polyimide $(4 \cdot 10^{-3}$ cm²/s). Comme ces matériaux sont souples dans les épaisseurs usuellement disponibles, on les utilisera le plus souvent en doublant une plaque formant substrat et qui pourra être, dans le cas d'un dispositif utilisé en transmission, du verre.

Deux modes de réalisation sont utilisables, selon que l'on visualise par réflexion de la lumière ambiante ou par transmission d'une lumière provenant d'une source située derrière l'écran.

Dans le fonctionnement par réflexion, qui est celui déjà connu pour la cellule destinée à la visualisation de la télévision décrite plus haut, la visualisation se fait par réflexion sur la surface réfléchissante des lignes chauffantes. Ces lignes peuvent être réalisées alors par exemple en évaporant sous vide de l'aluminium sous une épaisseur de 2 à 3000 Å. Une ligne résistive de cette épaisseur longue de 10 cm et large de 40/100 mm aura une résistance sensiblement égale à 50 Ω.

Pour pouvoir procéder à une inscription en moins de 40 ms, la puissance nécessaire pour un substrat en polytéréphtalate d'éthylèneglycol est de 100 W et, pour un substrat en polyimide, de 50 W. La tension d'alimentation sera alors d'environ 50 V, ce qui est une valeur tout à fait compatible avec les dispositifs de commutation à semi-conducteurs susceptibles d'être utilisés pour la commande.

Les colonnes qui permettent d'appliquer le champ électrique au cristal liquide seront transparentes et réalisées par exemple avec un oxyde mixte d'indium et d'étain. Comme elles ne dissipent pas de puissance, leur réalisation est tout à fait classique.

Pour obtenir une visualisation par transmission, il est nécessaire que les lignes chauffantes soit transparentes et réalisées par exemple, elles aussi, en oxyde mixte d'indium et d'étain sous une faible épaisseur. Dans ces conditions, la résistivité de la couche d'oxyde transparente est nécessairement plus grande. Une valeur courante est de 1 250 $\Omega^2$. Pour obtenir alors la puissance de chauffage nécessaire en alimentant une telle électrode entre ses extrémités, il faudrait utiliser une tension bien trop élevée et ne pouvant être commutée par des dispositifs de commande à semi-conducteurs. Pour pallier cet inconvénient, il faut une structure spéciale de la ligne chauffante.

Dans un premier mode de réalisation d'une telle ligne chauffante transparente, représentée en fig. 3, une couche conductrice transparente de résistivité élevée 301 est comprise entre 2 conducteurs 302 et 303 s'étendant le long de la ligne et de résistivité très faible. Ces conducteurs sont obtenus, par exemple, par évaporation d'aluminium sous une épaisseur relativement importante, de l'ordre de 1 μ par exemple, et leur résistance est négligeable par rapport à celle de la couche 301. Celle-ci se trouve donc alimentée entre les bornes positive et négative de la source de tension de chauffage perpendiculairement à sa plus grande dimension, et la résistance de l'ensemble est ainsi ramenée à une valeur correcte de l'ordre de 50 $\Omega$.

Dans une variante de réalisation représentée en fig. 4, la couche 301 est divisée en une série de pavés séparés par des fentes 304 perpendiculaires aux électrodes 302 et 303. Ces pavés correspondent exactement à l'intersection avec les colonnes 104 qui permettent d'appliquer le champ électrique. Cette disposition sert à régulariser les lignes de courant à l'intérieur de la couche 301.

Dans une autre réalisation particulière, représentée en fig. 5, on utilise une couche conductrice transparente de résistivité plus faible que dans le cas des fig. 3 et 4 et, afin de garder une résistance totale suffisante, on scinde la ligne chauffante en 4 tronçons de longueurs identiques, respectivement 511 à 514, et qui sont mis en série, au point de vue électrique, par 5 électrodes 501 à 505 connectées aux fragments 511 à 514 par leurs plus grands côtés. Ainsi, le courant électrique parcourt chacun de ces fragments perpendiculairement à sa plus grande longueur, d'où une résistance de chaque fragment relativement faible, mais ces fragments sont ensuite mis en série, ce qui multiplie par 4, par rapport à la résistance d'un fragment, la résistance totale de la ligne chauffante. Ainsi, dans le cas de la figure, le courant électrique part de l'électrode 501 pour passer à l'électrode 502 à travers le fragment 511, puis à l'électrode 503 à travers le fragment 512, et ainsi de suite jusqu'à l'électrode 505.

On peut utiliser, dans cette version, la variante représentée en fig. 4 en fragmentant chaque fragment tel que 511 en portions correspondant au croisement avec les colonnes 504. Les fentes qui servent à séparer ces portions étant parallèles aux lignes de courant, la résistance totale reste sensiblement inchangée.

En utilisant la variante de la fig. 5 avec un nombre différent de fragments de lignes, on peut adapter la résistance totale de la ligne à la résistivité de la couche utilisée, et cela dans une grande gamme de résistivités.

Alors que, dans les applications du type télévision, on utilise le plus souvent un cristal liquide du type cyanoalkylbiphényl, et notamment du 4-4'-cyanooctylbiphényl connu sous le nom de COB, qui présente entre la phase cristal liquide et la phase isotrope successivement une phase smectique A puis une phase nématique, il est intéressant, dans les dispositifs selon l'invention, où la vitesse d'inscription n'est pas recherchée à tout prix, d'utiliser un cristal liquide présentant, au lieu d'une phase nématique, une phase cholestérique.

Pour cela, on peut, par exemple, utiliser le même cristal liquide dit COB en y rajoutant une petite proportion d'un produit chiral tel que l'essence de térébenthine. Le COB ainsi dopé présente alors, lorsque la température augmente, successivement les phases cristalline, smectique A, cholestérique, et enfin isotrope. Lors du refroidissement la structure en coniques focales qui se met en place présente un pas plus ou moins grand selon le pourcentage de produit chiral qui est utilisé. Au fur et à mesure que ce pourcentage augmente, la dimension des domaines diffusants augmente et, simultanément, le champ électrique nécessaire pour retrouver une phase ordonnée diminue. Lorsque ce pas prend une valeur trop importante, il dépasse le pas de l'écran et l'inscription devient impossible. Par contre, lorsqu'il y a peu de dopant, le champ à appliquer est trop fort, d'autant plus que l'épaisseur du cristal liquide à utiliser pour obtenir une lame continue avec une cellule présentant des dimensions aussi grandes est relativement importante. Selon la réalisation utilisée, une valeur correcte de la quantité de dopant se situe aux alentours de quelques pour-cent. Le réglage se fait pour obtenir un pas de la structure en coniques focales comprise entre 1 et 100 μ.

**Revendications**

1. Dispositif de visualisation à cristal liquide, du type comprenant une couche de cristal liquide (103) inscriptible par effet thermo-électrique et comprise entre deux plaques (101, 105) dont l'une au moins est transparente, un ensemble de lignes résistives (102) situé entre l'une des plaques et la couche de cristal (103) liquide et permettant de chauffer le cristal liquide au moins jusqu'à sa température d'effacement selon successivement chacune des lignes, et un ensemble de colonnes (104) situé entre l'autre plaque et la couche de cristal liquide, croisé avec les lignes et permettant d'appliquer à toute cette couche (103), durant le refroidissement d'une ligne, un champ électrique représentant l'information à inscrire le long de la ligne qui se refroidit, caractérisé en ce que la diffusivité thermique de la plaque supportant les lignes résistives est inférieure à $2 \cdot 10^{-2}$ cm²/s.

2. Dispositif selon la revendication 1, caractérisé en ce que le cristal liquide est un cristal pouvant présenter une transition smectique A-cholestérique.

3. Dispositif selon la revendication 2, caractérisé en ce que le cristal liquide est un cyanoalkylbiphényl dopé avec un produit chiral.

4. Dispositif selon l'une quelconque des revendications 1 à 3, caractérisé en ce que la plaque supportant les lignes résistives est en verre.

5. Dispositif selon l'une quelconque des revendications 1 à 4, caractérisé en ce qu'il comprend en outre une couche de polytéréphtalate d'éthylène-glycol insérée entre la plaque supportant les lignes résistives et celles-ci.

6. Dispositif selon l'une quelconque des revendications 1 à 4, caractérisé en ce qu'il comporte en outre une couche de polyimide insérée entre la plaque supportant les lignes résistives et celles-ci.

7. Dispositif selon l'une quelconque des revendications 1 à 6, caractérisé en ce que les deux plaques enserrant le cristal liquide sont transparentes et que les lignes résistives sont formées d'une bande conductrice transparente de résistivité élevée insérée entre deux bandes conductrices opaques de résistivité faible.

8. Dispositif selon la revendication 7, caractérisé en ce que la bande conductrice transparente est sectionnée en un ensemble de portions correspondant aux croisements de la ligne résistive avec les colonnes.

9. Dispositif selon l'une quelconque des revendications 1 à 6, caractérisé en ce que les deux plaques enserrant le cristal liquide sont transparentes et que chaque ligne est composée d'un ensemble de fragments alignés formés d'une matière conductrice transparente de résistivité élevée, ces fragments étant bordés de bandes conductrices de résistivité faible et opaque permettant de connecter ces fragments en série de manière que le courant électrique les traverse selon leur largeur.

10. Terminal téléphonique du type comportant un poste téléphonique et un écran de visualisation permettant d'afficher des informations transmises sur la ligne téléphonique raccordée au poste, caractérisé en ce que l'écran de visualisation est un dispositif selon l'une quelconque des revendications 1 à 9.

## Patentansprüche

1. Flüssigkristall-Anzeigevorrichtung mit einer Flüssigkristallschicht (103), die durch thermoelektrischen Effekt einschreibbar ist und zwischen zwei Platten (101, 105) liegt, von denen mindestens eine transparent ist, mit einer Schar von Widerstandszeilen (102) zwischen einer der Platten und der Flüssigkristallschicht (103), die die Aufheizung des Flüssigkristalls zumindest auf seine Löschtemperatur gemäß der Aufeinanderfolge der Zeilen zu bewirken vermögen, und mit einer Schar von Spalten (104) zwischen der anderen Platte und der Flüssigkristallschicht, die sich mit den Zeilen kreuzen und es ermöglichen, an die ganze Schicht (103) während der Abkühlung einer Zeile ein die einzuschreibende Information darstellendes elektrisches Feld entlang der sich abkühlenden Zeile anzulegen, dadurch gekennzeichnet, daß die Wärmediffusität der die Widerstandszeilen tragenden Platte unter $2 \cdot 10^{-2}$ cm²/s liegt.

2. Vorrichtung nach dem Anspruch 1, dadurch gekennzeichnet, daß der Flüssigkristall ein Kristall ist, der einen smektisch A-cholesterischen Übergang aufweisen kann.

3. Vorrichtung nach dem Anspruch 2, dadurch gekennzeichnet, daß der Flüssigkristall ein mit einem Chiralprodukt gedoptes Zyanoalkylbiphenyl ist.

4. Vorrichtung nach einem der Ansprüche 1 bis 3, dadurch gekennzeichnet, daß die die Widerstandszeilen tragenden Platte aus Glas ist.

5. Vorrichtung nach einem der Ansprüche 1 bis 4, dadurch gekennzeichnet, daß sie außerdem eine aus Äthylenglykolpolyterephtalat bestehende Schicht enthält, die zwischen die die Widerstandszeilen tragende Platte und diese Zeilen eingefügt ist.

6. Vorrichtung nach einem der Ansprüche 1 bis 4, dadurch gekennzeichnet, daß sie außerdem eine Polyimidschicht aufweist, die zwischen die die Widerstandszeilen tragende Platte und diese Zeilen eingefügt ist.

7. Vorrichtung nach einem der Ansprüche 1 bis 6, dadurch gekennzeichnet, daß die beiden den Flüssigkristall umgebenden Platten durchsichtig sind, und daß die Widerstandszeilen aus einem durchsichtigen leitfähigen Band hohen Widerstandswerts bestehen, das von zwei undurchsichtigen leitfähigen Bändern geringen Widerstandswerts umgeben ist.

8. Vorrichtung nach dem Anspruch 7, dadurch gekennzeichnet, daß das leitfähige durchsichtige Band in eine Gruppe von Abschnitten entsprechend den Kreuzungspunkten der Widerstandszeile mit den Spalten unterteilt ist.

9. Vorrichtung nach einem der Ansprüche 1 bis 6, dadurch gekennzeichnet, daß die beiden Platten, die den Flüssigkristall umgeben, durchsichtig sind, und daß jede Zeile aus einer Gruppe von fluchtend angeordneten Fragmenten zusammengesetzt ist, die aus einem durchsichtigen leitfähigen Material eines hohen Widerstandswerts besteht und die von leitfähigen undurchsichtigen Bändern eines geringen Widerstandswerts eingefaßt sind, wodurch es möglich wird, diese Fragmente in Reihe zu verbinden, so daß der elektrische Strom sie quer durchfließt.

10. Fernsprech-Endgerät mit einem Fernsprecher und einem Anzeigeschirm, an dem über die angeschlossene Fernsprechleitung übertragene Informationen sichtbar gemacht werden können, dadurch gekennzeichnet, daß der Anzeigeschirm eine Vorrichtung nach einem der Ansprüche 1 bis 9 ist.

## Claims

1. A liquid crystal visual display unit of the type incorporating a liquid crystal layer (103) which can be inscribed by the thermoelectric effect and incorporated between two plates (101, 105), whereof at least one is transparent, a system of resistive lines (102) located between one of the plates and the liquid crystal layer (103) and making it possible to heat the liquid crystal at least up to its erasure temperature successively in accordance with each of the lines, and a system of columns (104) located between the other plate and the liquid crystal layer intersecting with the lines and making it possible to apply to the whole of this layer (103) during the cooling of a line an electric field representing the information to be inscribed along the cooling line, characterized in that the thermal diffusivity of the plate supporting the resistive lines is below $2 \cdot 10^{-2}$ cm²/s.

2. A unit according to claim 1, characterized in that the liquid crystal is of the kind which can have a smetic A-cholesteric transition.

3. A unit according to claim 2, characterized in that the liquid crystal is a cyanoalkylbiphenyl material which is doped by a chiral product.

4. A unit according to anyone of the claims 1 to 3, characterized in that the plate supporting the resistive lines is made from glass.

5. A unit according to any one of the claims 1 to 4, characterized in that it also comprises an ethylene glycol polyterephtalate layer inserted between the plate supporting the resistive lines and the latter.

6. A unit according to any one of the claims 1 to 4, characterized in that it also comprises a polyimide layer inserted between the plate supporting the resistive lines and the latter.

7. A unit according to any one of the claims 1 to 6, characterized in that the two plates enclosing the liquid crystal are transparent and that the resistive lines are formed by a transparent conductive strip of high resistivity inserted between two opaque conductive strips of low resistivity.

8. A unit according to claim 7, characterized in that the transparent conductive strip is divided into a set of portions corresponding to the intersections of the resistive line with the columns.

9. A unit according to any one of the claims 1 to 6, characterized in that the two plates enclosing the liquid crystal are transparent and that each line is constituted of a system of aligned portions formed from a high resistivity transparent conductive material, said portions being bordered by opaque, low resistivity conductive strips making it possible to connect these portions in series in such a way that the electrical current traverses them along with their width.

10. A telephone terminal of the type incorporating a telephone set and a visual display screen making it possible to display informations transmitted on the telephone line connected to the telephone set, characterized in that the display screen is a unit according to any one of the claims 1 to 9.

FIG.1

FIG.2

FIG. 3

302
301
303

FIG. 4

302
301
303
304

FIG. 5

511
501
503
512
513
502
505
504
514

9